(19) **Europäisches Patentamt**

**European Patent Office**

**Office européen des brevets**

(11) Veröffentlichungsnummer: **0 141 772**
**B1**

(12) **EUROPÄISCHE PATENTSCHRIFT**

(45) Veröffentlichungstag der Patentschrift: **07.11.90**

(21) Anmeldenummer: **84730122.3**

(22) Anmeldetag: **09.11.84**

(51) Int. Cl.⁵: **A 01 G 13/00, E 01 C 9/00**

(54) **Belüftungsplatte für die Sanierung oder Neuanpflanzung von Bäumen.**

(30) Priorität: **09.11.83 DE 3340398**

(43) Veröffentlichungstag der Anmeldung:
**15.05.85 Patentblatt 85/20**

(45) Bekanntmachung des Hinweises auf die
Patenterteilung:
**07.11.90 Patentblatt 90/45**

(84) Benannte Vertragsstaaten:
**AT BE CH DE FR GB IT LI LU NL SE**

(56) Entgegenhaltungen:
**EP-A-0 019 705**
**DE-A-3 029 590**
**FR-A- 834 309**

(73) Patentinhaber: **Verband landwirtschaftlicher Genossenschaften von Bern und benachtbarter Kantone VLG Bern**
**Erlachstrasse 5**
**CH-3012 Bern (CH)**

(72) Erfinder: **Dunkel, Volker**
**Huchtinger Heerstrasse 144**
**D-2800 Bremen 66 (DE)**

(74) Vertreter: **Thömen, Uwe, Dipl.-Ing.**
**Patentanwalt U. Thömen Zeppelinstrasse 5**
**D-3000 Hannover 1 (DE)**

Courier Press, Leamington Spa, England.

**Beschreibung**

Die Erfindung betrifft eine Baumbelüftungsplatte für die Sanierung oder Neuanpflanzung von Bäumen gemäß dem Oberbegriff des Patentanspruchs 1.

Baumbelüftungsplatten dieser Gattung sind durch die DE-A-30 29 590 grundsätzlich bekannt und gewinnen eine immer größer werdende Bedeutung, da vor allem im städtischen Bereich Straßenbäume oder auch Bäume in Fußgängerzonen, die zum Zwecke der Versorgung und Anlieferung von Geschäften auch durch Kraftfahrzeuge befahrbar sind, erheblichen Umweltbelastungen ausgesetzt sind.

Durch den zunehmenden Bedarf an Stellflächen (Parkplätze) und Fußgängerzonen werden die Bäume ihres natürlichen Standortes enthoben, und die extremen Umweltbedingungen tragen ein weiteres dazu bei, daß die Bäume sich nicht mehr ausreichend ernähren können und der Gefahr unterliegen, abzusterben.

Die schädlichen Umweltbedingungen sind vor allem auch auf die Verdichtung des Erdbodens infolge mechanischer und physikalischer Eingriffe zurückzuführen. Die Verdichtung des Erdbodens tritt dadurch ein, daß im Bereich der Bäume ein fester Belag (Straßendecke, Fuß- oder Fahrradwege, Pflastersteine in einer Fußgängerzone) in Form einer Versiegelung erforderlich ist. Dieser Belag drückt auf den normalerweise lockeren Erdboden, der dadurch verdichtet wird und eine unzureichende Belüftung des ohnehin nährstoffarmen Bodens bewirkt.

Ein weiteres Problem ist die Wasserknappheit durch Grundwasserabsenkungen, wie sie bei Tiefbaumaßnahmen vorgenommen werden. Somit ist neben der schädlichen Verdichtung des Erdbodens auch die geringe Bewässerung der Bäume ein nachteiliger Faktor.

Häufig erstreckt sich die erwähnte Versiegelung unmittelbar bis an den Baumstamm, und man hat deshalb auch schon vorgesehen, den festen Bodenbelag um den Baumstamm herum zu entfernen und in diesen Bereich ausschließlich Erdboden einzufüllen. Der genannte Bereich um den Baumstamm herum wird als Ernährungsbereich bezeichnet, denn hier ist eine natürliche und auch künstliche Wasserzufuhr möglich. Außerdem kann durch Auflockerung des Erdbodens auch für eine bessere Belüftung gesorgt werden.

In der Praxis ist allerdings festzustellen, daß die Maßnahme, innerhalb eines relativ schmalen Streifens in unmittelbarer Nähe des Baumstammes einen Ernährungsbereich vorzusehen, nicht ausreicht, um die erforderliche Ernährung des Baumes sicher zu stellen. Man könnte zwar daran denken, den nicht versiegelten Ernährungsbereich zu vergrößern und zu erweitern, jedoch steht einem solchen Schritt das schon erwähnte Bedürfnis an Stellplätzen für Kraftfahrzeuge und damit dem Bedürfnis an einem festen Bodenbelag entgegen.

Durch die eingangs genannte DE-A-30 29 590 ist ein Baumrost zum Abdecken einer Baumscheibe — also des den Baum umgebenden Erdreichs — bekannt, der durch mehrere aneinanderfügbare Rostabschnitte gebildet ist, die lösbar miteinander verbunden werden können.

Bei diesem bekannten aus Stahl bestehenden Baumrost wird ebenfalls davon ausgegangen, daß die Bäume für ihr Wachstum eine gewisse Fläche Erdreich um den Baumstamm herum benötigen, wobei diese Fläche keinen mechanischen Belastungen ausgesetzt werden darf, damit keine Verdichtung des Erdreichs erfolgt. Der bekannte Baumrost ist nun so stabil ausgebildet, daß er den Beanspruchungen eines PKW-Verkehrs standhält und somit auch als Stellfläche für PKW's ausgenutzt werden kann. Der aus stabilem Stahl bestehende Baumrost besitzt Öffnungen, so daß er von Wasser durchdrungen werden kann, welches in das darunter liegende Erdreich gelangt. Es ist jedoch von Nachteil, daß der bekannte Baumrost aus Stahl keine wasserspeichernde Eigenschaft besitzt.

Durch die FR-A-834 309 ist ferner eine stabil ausgebildete poröse Platte bekannt, die ebenfalls geeignet ist, eine schädliche Verdichtung des Erdbodens im Ernährungsbereich des Baumes zu verhindern und gleichzeitig als Stellplatz für Kraftfahrzeuge zu dienen. Dabei ist in besonderer Weise die platte so ausgestaltet, daß ein rieselfähiges Gebilde entsteht, wenn die Platte zerbrechen sollte.

Diese bekannte Platte soll anstelle von nach Art eines Gitters ausgebildeten Platten eingesetzt werden, wobei davon ausgegangen wird, daß durch die gitterartigen Platten eine problemlose Wasserzufuhr gewährleistet ist. Auch die bekannte poröse platte ist deshalb in der Weise ausgebildet, daß das Wasser die Platte schnell durchdringen kann. Somit besitzen auch diese der Wasserzufuhr dienenden Platten keine wasserspeichernden Eigenschaften.

Der Erfindung liegt die Aufgabe zugrunde, eine Baumbelüftungsplatte der im Oberbegriff des Patentanspruchs 1 genannten Gattung zu schaffen, die bei stabilem Aufbau und ihrer Eignung, auch von Kraftfahrzeugen befahren zu werden, die Eigenschaft besitzt, Wasser speichern zu können.

Die Lösung dieser Aufgabe erfolgt durch die Merkmale des kennzeichnenden Teils des Patentanspruchs 1.

Die erfindungsgemäße Baumbelüftungsplatte besteht in neuartiger Weise aus einem offenporigen, wasserspeichernden Material, welches in einem Bindemittel — z.B. Zementleim oder Beton — als Zuschlagsstoff eingebunden ist. Dadurch wird eine Baumbelüftungsplatte geschaffen, die sowohl mechanisch stabil ist als auch wasserspeichernde Eigenschaften besitzt, so daß das Wasser die Baumbelüftungsplatte nicht nur durchdringt, sondern in der platte gespeichert werden kann.

In zweckmäßiger Ausgestaltung der Erfindung sind in der Baumbelüftungsplatte eine Vielzahl von Öffnungen vorgesehen, die mit Granulat in Form von offenporiger Lava verfüllt werden können. Die Körnung des Granulats kann zweckmäßigerweise 1 — 4 mm betragen.

Die Öffnungen können in länglicher Form und relativ schmal gewählt werden, und da sie mit einem feinkörnigen Granulat verfüllt sind, kann die Baumbelüftungsplatte ohne weiteres als Stellplatz für Kraftfahrzeuge verwendet werden.

Die mechanische Stabilität der Baumbelüftungsplatte läßt sich in vorteilhafter Weiterbildung der Erfindung dadurch erhöhen, daß die Baumbelüftungsplatte in ihrem unteren Bereich mit einer Bewehrung versehen ist.

Mit den erfindungsgemäßen Baumbelüftungsplatten ist es möglich, den Ernährungsbereich des Baumes erheblich zu vergrößern. Trotzdem steht in gewünschter Weise ein fester Bodenbelag zur Verfügung, beispielsweise als Stellplatz für Kraftfahrzeuge. Dies wird dadurch erreicht, daß der versiegelte Bereich mit den Baumbelüftungsplatten in den Ernährungsbereich des Baumes mit einbezogen ist.

Die Baumbelüftungsplatten mit ihrem offenporigen Material ermöglichen eine ausreichende Belüftung und Wasserzufuhr und können gleichzeitig die Funktion eines festen Bodenbelages übernehmen. Ferner schaffen sie einen ausreichenden Lebensraum für die Bäume, dessen Ernährungsbereich praktisch beliebig erweitert werden kann.

Zweckmäßige Ausgestaltungen und vorteilhafte Weiterbildungen der Erfindung sind in den Unteransprüchen angegeben und der Zeichnung zu entnehmen.

Nachfolgend wird die Erfindung anhand des in der Zeichnung dargestellten Ausführungsbeispieles näher erläutert. Es zeigen:

Fig. 1 Eine schematische Draufsicht eines Straßenbaumes im Bereich eines festen Bodenbelages, wobei der Baumstamm im Querschnitt dargestellt und der obere Teil des Baumes nicht gezeichnet ist,

Fig. 2 eine Seitenansicht eines Baumes, in dessen Bereich eine Auskofferung ausgehoben worden ist,

Fig. 3 in einer Querschnittsansicht eine auf ein Substrat und eine Lavaschicht gelegte Baumbelüftungsplatte,

Fig. 4, 5 jeweils eine Draufsicht nach einer erfolgten Baumsanierung, und

Fig. 6 eine Querschnittsansicht einer anderen Baumbelüftungsplatte.

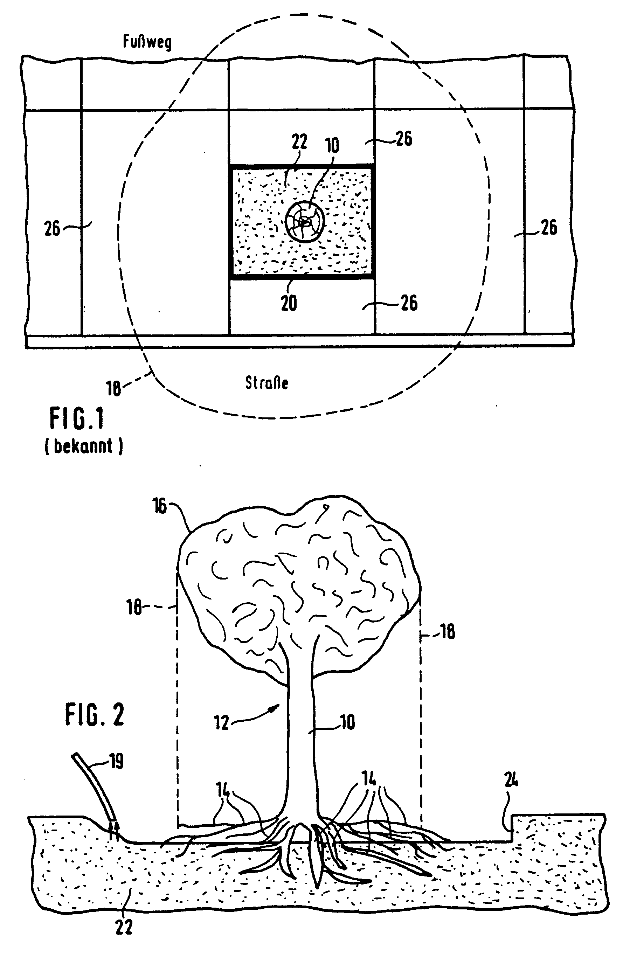

In der Draufsicht gemäß Fig. 1 ist von einem Straßenbaum die Baumkrone nicht dargestellt, so daß in einer Schnittansicht nur der Baumstamm 10 zu erkennen ist. Im übrigen soll die Fig. 1 lediglich verdeutlichen, an welchen ungünstigen Standorten sich die Straßenbäume heute befinden.

Benachbart zu dem Baumstamm 10 befinden sich eine Straße und ein Fußweg, und bis dicht an den Baumstamm 10 heran ist ein fester Bodenbelag z.B. in Form von Platten 26 vorgesehen etwa um Parkmöglichkeiten für Kraftfahrzeuge zu schaffen. Somit verbleibt lediglich ein kleiner durch die verstärkt gezeichnete Linie angedeuteter Ernährungsbereich 20. Innerhalb dieses Bereiches—auch als Lebensraum bezeichnet—ist der Erdboden nicht versiegelt, also nicht durch Platten 26 abgedeckt.

Bezüglich des Ernährungsbereiches 20, also des nicht versiegelten Bereiches, wird normalerweise eine Abmessung von 8 m² gefordert. Allerdings ist diese Größenordnung bei Straßenbäumen meist nicht einzuhalten. Hinzu kommt, daß die Platten 26 wegen ihres Gewichtes eine Verdichtung des darunter befindlichen Bodens bewirken, was dann zu den eingangs schon erwähnten Schäden führt. Neben der nachteiligen Verdichtung ist auch noch anzumerken, daß die Platten 26 eine Bewässerung des darunter befindlichen Bodens verhindern.

In Fig. 1 ist mit einer gestrichelten Linie noch der Kronentraufbereich 18 angedeutet, und wie man erkennen kann, erstrecken sich die Platten 26 bis in den Kronentraufbereich 18 hinein.

Fig. 2 zeigt einen Straßenbaum 12 mit einer Baumkrone 16 und Wurzeln 14, die sich zum Teil bis zum Rand des Kronentraufbereiches 18 erstrecken.

Bei einer Sanierung Werden zunächst die Platten 26 (vgl. Fig. 1) entfernt, und mittels eines — flexiblen — Saugrohres 19 wird dann der Erdboden abgesaugt, um eine Auskofferung 24 nach Art einer Grube herzustellen. Zum Absaugen des Erdbodens 22 kann eine an sich bekannte Saugvorrichtung verwendet werden, wie sie für die Bohrlöcher bei der eingangs genannten Sanierungsmaßnahme mit den Baumbelüftern verwendet wird. Durch das Absaugen wird der Vorteil erzielt, daß die freigelegten Wurzeln möglichst wenig beschädigt werden.

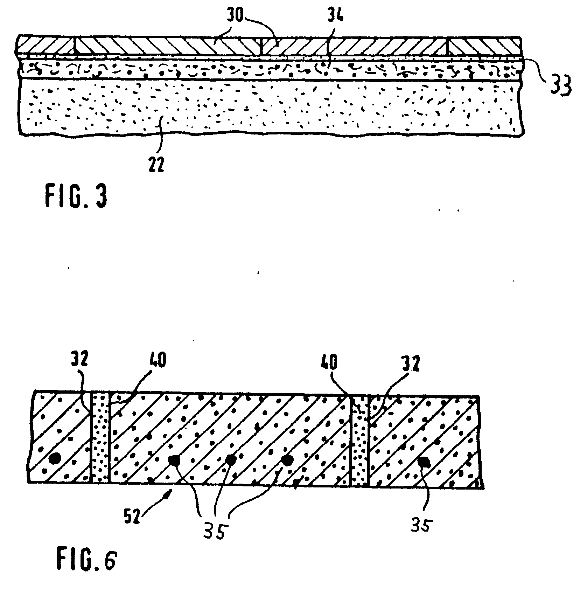

Nachdem die Auskofferung 24 mit einer Tiefe von beispielsweise 30 cm fertiggestellt worden ist, wird in die Auskofferung 24 eine Schicht eines Substrats 34 eingebracht, und auf das Substrat 34 werden anschließend Baumbelüftungsplatten 30 gelegt (vgl. Fig. 3).

Besonders zweckmäßig ist es, auf das Substrat 34 noch eine Schicht 33 von Lava mit einer Körnung zwischen 1 — 32 mm aufzubringen und erst danach die Baumbelüftungsplatten auf die Schicht 33 zu legen.

Hauptbestandteil des Substrats 34 ist ein offenporiges Material in Form von Granulat, um eine Tragfähigkeit für die Baumbelüftungsplatten 30 zu erzielen. Vorzugsweise wird Lava, Bims oder Blähton in Form von Granulat verwendet.

Außerdem kann das Substrat 34 eine geringe Menge einer organischen Substanz, z.B. kompostierte Buchenlauberde enthalten. Weitere Bestandteile des Substrats 34 können sein: grober Spaghnum, z.B. Weißtorf und ein Strukturstabilisator in Form von z.B. Steinwolle, um den Zersetzungsprozeß der organischen Substanz zu vermindern. Schließlich ist auch noch die Verwendung eines Sorbtionsträgers in Form eines Ionenaustauschers vorteilhaft.

Als ein Beispiel wird nachfolgend eine Zusammensetzung für das Substrat 34 angegeben:

40% Lava

40% kompostierter Rindenhumus

20% hygroskopische Mineralwolle als Granulat.

Voranstehend wurde eine Baumsanierung beschrieben. Bei der Neuanpflanzung eines Straßenbaumes 12 wird in der gleichen Weise verfahren. Auch hier wird also eine Auskofferung 24 hergestellt, in welche dann das Substrat 34 eingebracht wird. Auf das Substrat wird eine Schicht 33 Lava gelegt und anschließend werden die Baumbelüftungsplatten 30 aufgebracht. Bezüglich des Substrats 34 ist anzumerken, daß der zuvor genannte Sorbtionsträger in Form eines Ionenaustauschers bei einer Neuanpflanzung nicht unbedingt erforderlich ist.

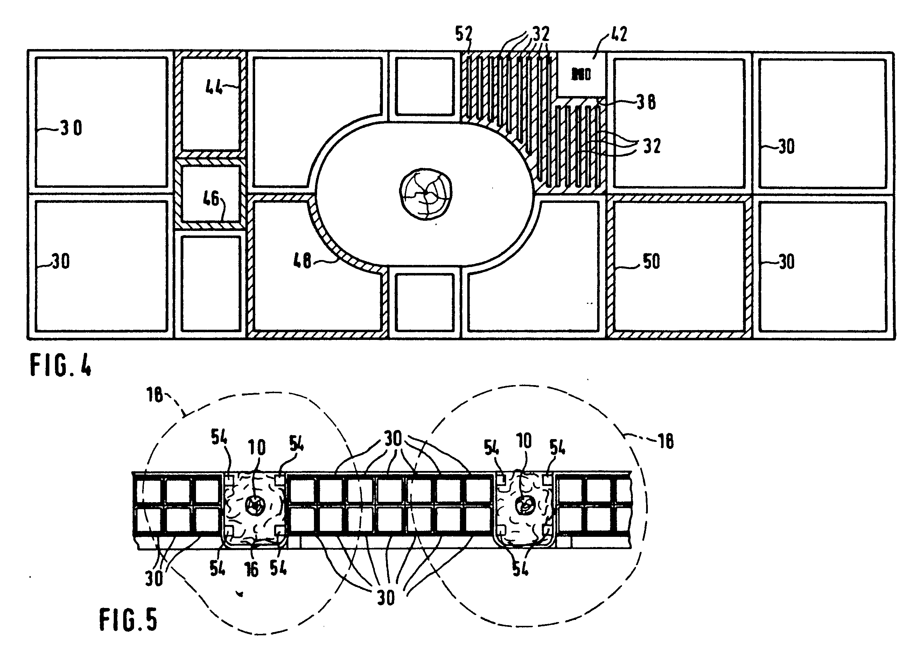

In den Fig. 4 und 5 ist jeweils in einer Draufsicht der Zustand nach Beendigung der Sanierung bzw. nach einer erfolgten Neuanpflanzung dargestellt. Die Baumbelüftungsplatten können sich ohne Bedenken sehr nahe bis an den Baumstamm 10 erstrecken, z.B. bis auf 50 cm. Der um den Baumstamm 10 herum verbleibende schmale ringförmige Streifen, der in Fig. 1 als Ernährungsbereich 20 bezeichnet wurde, muß bei der Erfindung nämlich nicht mehr die Funktion als alleiniger Ernährungsbereich übernehmen, denn dieser ist bei der Erfindung durch die Baumbelüftungsplatten erweitert worden, was nachfolgend noch näher erläutert wird.

Es sind unterschiedliche Formen und Größen der Baumbelüftungsplatten möglich, wobei in Fig. 4 die Umrandungen verschiedener Baumbelüftungsplatten 44, 46, 48 und 50 durch eine Schraffur gekennzeichnet sind. Bei der vollständig schraffiert gezeigten Baumbelüftungsplatte 52 sind eine Vielzahl von Öffnungen 32 zu erkennen, welche bis zum unter der Baumbelüftungsplatte 52 befindlichen Substrat bzw. bis zur Lava-Schicht 33 reichen.

Die Baumbelüftungsplatte 52 besitzt in ihrer äußeren, dem Baumstamm 10 abgewandten Ecke eine Aussparung 38, die durch eine Abdeckung 42 für einen an sich bekannten Baumbelüfter ausgefüllt ist. An Stelle der Abdeckung 42 kann auch ein Poller die Aussparung 38 ausfüllen, beispielsweise um zu verhindern, daß Kraftfahrzeuge zu nahe am Baumstamm 10 abgestellt werden.

Die Darstellung in Fig. 5 zeigt besonders deutlich, daß durch die Baumbelüftungsplatten ausreichend Stellplätze zum Parken von Kraftfahrzeugen zu Verfügung gestellt werden. Die beiden Straßenbäume 12 sind an vier Ecken durch Poller 54 geschützt.

Eine andere vorteilhafte Ausgestaltung einer Baumbelüftungsplatte 52 ist in Fig. 6 dargestellt. Eine Bewehrung 35 ist im unteren Teil der Baumbelüftungsplatte 52 angeordnet.

Wie weiter oben schon an Hand von Fig. 4 erwähnt wurde, besitzt die Baumbelüftungsplatte 52 mehrere Öffnungen 32, die sich über die gesamte Dicke der Baumbelüftungsplatte 52 erstrecken.

Diese Öffnungen 32 werden mit Granulat 40 in Form offenporiger Lava ausgefüllt, wobei die Körnung des Granulats etwa 1 — 4 mm beträgt.

Ein wesentlicher Aspekt der Erfindung besteht darin, daß die neuartige Baumbelüftungsplatte 52 ebenso wie die eingangs erwähnte bekannte Platte 26 in Fig. 1 als Stellfläche für Kraftfahrzeuge geeignet ist. Es erfolgt also auch bei der Erfindung im Grunde genommen eine Versiegelung, allerdings ohne die nachteiligen Wirkungen, die sich bei Verwendung der bekannten Platten 26 ergeben.

Neben der Versiegelung gewährleistet die Baumbelüftungsplatte 52 nämlich die Erhaltung eines Ernährungsbereiches für den Straßenbaum 12. Für die Ernährung ist das Substrat 34 verantwortlich, und durch die Öffnungen 32 ist eine "Verbindung" durch die Baumbelüftungsplatte 30 hindurch zu dem Substrat 34 sichergestellt. Es ist daher eine ausreichende Wasserversorgung auf Grund natürlicher Niederschläge möglich. Ferner gestattet die Verwendung der offenporigen Lava für die Baumbelüftungsplatte 52 auch eine ausreichende Belüftung, die bei der an Hand von Fig. 1 geschilderten Verdichtung nicht gegeben ist.

Die Erfindung gestattet aber nicht nur eine Erweiterung des Ernährungsbereiches, als Vorteil ist auch noch zu nennen, daß die Pflege der Bäume sich erheblich reduziert. Durch den Einsatz der neuartigen Baumbelüftungsplatten wird das Oberflächenwasser (übrigens auch eventueller Tau) gezielt aufgenommen, wozu die offenporige Lava beiträgt. Es werden also insgesamt optimale Standortbedingungen für einen Straßenbaum geschaffen, so daß spätere Sanierungen überflüssig werden. Die Erfindung besitzt daher auch einen Kostenvorteil.

Zu erwähnen ist noch, daß bei der Erfindung auch im unmittelbaren Bereich des Baumstammes 10 das Substrat 34 vorgesehen werden kann, allerdings befindet sich in diesem Bereich keine Baumbelüftungsplatte.

Wenn gemäß Fig. 5 eine Baumreihe angepflanzt oder saniert wird, erstrecken sich die Baumbelüftungsplatten 30 jeweils zwischen den einzelnen Bäumen, und zwar auch außerhalb der Kronentraufbereiche 18, auf welche der Ernährungsbereich beispielsweise erweitert worden ist. Die Baumbelüftungsplatten 30 können also einheitlich verlegt werden, auch wenn sich dabei einige Platten außerhalb des Kronentraufbereiches 18 befinden.

**Patentansprüche**

1. Baumbelüftungsplatte für die Sanierung oder Neuanpflanzung von Bäumen, insbesondere von Straßenbäumen, mit einem stabilen Aufbau, so daß die Baumbelüftungsplatte Belastungen durch Kraftfahrzeuge standhält, dadurch gekennzeichnet, daß die Baumbelüftungsplatte (30) aus einem offenporigen, wasserspeichernden Material gebildet ist, welches in einem Bindemittel als Zuschlagstoff eingebunden ist.

2. Baumbelüftungsplatte nach Anspruch 1, dadurch gekennzeichnet, daß sie mit die Baumbelüftungsplatte (30) durchdringenden Öffnungen (32) versehen ist.

3. Baumbelüftungsplatte nach Anspruch 1 oder 2, dadurch gekennzeichnet, daß das Bindemittel durch Zementleim gebildet ist.

4. Baumbelüftungsplatte nach Anspruch 1 oder 2, dadurch gekennzeichnet, daß das Bindemittel durch Beton gebildet ist.

5. Baumbelüftungsplatte nach Anspruch 1 oder 2, dadurch gekennzeichnet, daß das Bindemittel durch Kunstharz gebildet ist.

6. Baumbelüftungsplatte nach Anspruch 1, dadurch gekennzeichnet, daß das offenporige Material durch Lava gebildet ist.

7. Baumbelüftungsplatte nach Anspruch 1, dadurch gekennzeichnet, daß das offenporige Material durch Bims gebildet ist.

8. Baumbelüftungsplatte nach Anspruch 1, dadurch gekennzeichnet, daß das offenporige Material durch Blähton gebildet ist.

9. Baumbelüftungsplatte nach Anspruch 1, dadurch gekennzeichnet, daß das offenporige Material durch Blähschiefer gebildet ist.

10. Baumbelüftungsplatte nach Anspruch 1, dadurch gekennzeichnet, daß das offenproge Material durch haufwerkporigem Beton gebildet ist.

11. Baumbelüftungsplatte nach Anspruch 1, dadurch gekennzeichnet, daß das offenporige Material durch Beton mit hygroskopischer Mineralfaser vermischt gebildet ist.

12. Baumbelüftungsplatte nach einem der vorhergehenden Ansprüche 1 — 11, dadurch gekennzeichnet, daß die Baumbelüftungsplatte (30) mit einer Bewehrung (35) versehen ist.

13. Baumbelüftungsplatte nach Anspruch 12, dadurch gekennzeichnet, daß sich die Bewehrung (35) im unteren Teil der Baumbelüftungsplatte (30) befindet.

14. Baumbelüftungsplatte nach einem der vorhergehenden Ansprüche 1 — 13, dadurch gekennzeichnet, daß die Öffnungen (32) mit Granulat (40) in Form von offenporiger Lava verfüllt sind.

15. Baumbelüftungsplatte nach Anspruch 14, dadurch gekennzeichnet, daß die Körnung des Granulats (40) etwa 1 bis 32 mm beträgt.

16. Baumbelüftungsplatte nach Anspruch 15, dadurch gekennzeichnet, daß die Körnung des Granulats (40) etwa 1 bis 4 mm beträgt.

17. Baumbelüftungsplatte nach einem der vorhergehenden Ansprüche 1 — 16, dadurch gekennzeichnet, daß die Baumbelüftungsplatte (30) mindestens in einer Ecke eine Aussparung (38) besitzt, welche durch eine Abdeckung (42) für einen Baumbelüfter oder durch einen Poller ausfüllbar ist.

**Revendications**

1. Plaque de ventilation d'arbre pour l'assainissement ou le plantage des arbres, en particulier d'arbres de rues, avec une structure stable de manière que la plaque de ventilation d'arbre résiste à la charge de véhicules, caractérisée en ce que la plaque de ventilation d'arbre (30) est faite en une matière à pores ouverts emmagasinant l'eau, la matière étant intégrée dans un liant, tel que des aggrégats.

2. Plaque de ventilation d'arbre selon la revendication 1, caractérisée en ce qu'elle est pourvue d'ouvertures (32) traversant la plaque de ventilation d'abre (30).

3. Plaque de ventilation d'arbre selon la revendication 1, caractérisée en ce que le liant est constitué par de la pâte de ciment.

4. Plaque de ventilation d'arbre selon la revendication 1, caractérisée en ce que le liant est constitué par du béton.

5. Plaque de ventilation d'arbre selon la revendication 1, caractérisée en ce que le liant est constitué par de la résine artificielle.

6. Plaque de ventilation d'arbre selon la revendication 1, caractérisée en ce que la matière à pores ouverts est constituée par de la lave.

7. Plaque de ventilation d'arbre selon la revendication 1, caractérisée en ce que la matière à pores ouverts est constituée par de la ponce.

8. Plaque de ventilation d'arbre selon la revendication 1, caractérisée en ce que la matière à pores ouverts est constituée par de l'argile expansée.

9. Plaque de ventilation d'arbre selon la revendication 1, caractérisée en ce que la matière à pores ouverts est constituée par du schiste expansé.

10. Plaque de ventilation d'arbre selon la revendication 1, caractérisée en ce que la matière à pores ouverts est constituée par du béton caverneux.

11. Plaque de ventilation d'arbre selon la revendication 1, caractérisée en ce que la matière à pores ouverts est constituée par du béton mélangé à des fibres minérales hygroscopiques.

12. Plaque de ventilation d'arbre selon l'une des revendications précédentes 1 à 11, caractérisée en ce que la plaque de ventilation d'arbre (30) est pourvue d'une armature (35).

13. Plaque de ventilation d'arbre selon la revendication 12, caractérisée en ce que l'armature (35) se trouve dans la partie inférieure de la plaque de ventilation d'arbe (30).

14. Plaque de ventilation d'arbre selon l'une des revendications 1 à 13, caractérisée en ce ue les ouvertures (32) sont remplies d'un granulat (40) sous la forme de lave à pores ouverts.

15. Plaque de ventilation d'arbre selon la revendication 14, caractérisée en ce que la granulométrie du granulat (40) va de 1 à 32 mm environ.

16. Plaque de ventilation d'arbre selon la revendication 15, caractérisée en ce que la granulométrie du granulat (40) va de 1 à 4 mm environ.

17. Plaque de ventilation d'abre selon l'une des revendications 1 à 16, caractérisée en ce que la plaque de ventilation d'arbre (30) comporte au moins dans un coin un évidement (38) qui peut être rempli par un revêtement (42) pour une ventilation d'arbre ou par une borne.

**Claims**

1. Tree ventilation slab for the rehabilitation or new planting of trees, especially of trees in or near roads, having a strong construction so that the tree ventilation slab withstands loadings from automobiles, characterized in that the tree ventilation slab (30) is formed of an open-pore, water-storing material, which is bound as an aggregate in a binder.

2. Tree ventilation slab according to Claim 1, characterized in that it is provided with openings (32) passing through the tree ventilation slab (30).

3. Tree ventilation slab according to Claim 1 or 2, characterized in that the binder is formed of cement paste.

4. Tree ventilation slab according to Claim 1 or 2, characterized in that the binder is formed of concrete.

5. Tree ventilation slab according to Claim 1 or 2, characterized in that the binder is formed of synthetic resin.

6. Tree ventilation slab according to Claim 1, characterized in that the open-pore material is formed of lava.

7. Tree ventilation slab according to Claim 1, characterized in that the open-pore material is formed of pumice.

8. Tree ventilation slab according to Claim 1, characterized in that the open-pore material is formed of expanded clay.

9. Tree ventilation slab according to Claim 1, characterized in that the open-pore material is formed of expanded shale.

10. Tree ventilation slab according to Claim 1, characterized in that the open-pore material is formed of porous concrete.

11. Tree ventilation slab according to Claim 1, characterized in that the open-pore material is formed of concrete mixed with hygroscopic mineral fibre.

12. Tree ventilation slab according to one of the preceding Claims 1 to 11, characterized in that the tree ventilation slab (30) is provided with a reinforcement (35).

13. Tree ventilation slab according to Claim 12, characterized in that the reinforcement (35) is situated in the lower part of the tree ventilation slab (30).

14. Tree ventilation slab according to one of the preceding Claims 1 to 13, characterized in that the openings (32) are filled with granulate (40) in the form of open-pore lava.

15. Tree ventilation slab according to Claim 14, characterized in that the grain size of the granulate (40) is from about 1 to 32 mm.

16. Tree ventilation slab according to Claim 15, characterized in that the grain size of the granulate (40) is from about 1 to 4 mm.

17. Tree ventilation slab according to one of the preceding Claims 1 to 16, characterized in that the tree ventilation slab (30) possesses, in at least one corner, an opening (38) which can be filled by a cover (42) for a tree ventilator or by a bollard.

Fußweg

22  10
26

26

26

20  26

18

Straße

# FIG.1
## ( bekannt )

16

18

18

FIG. 2

12  10

19

14  14  24

22

FIG. 3

FIG. 6

FIG. 4

FIG.5